# EUROPÄISCHE PATENTSCHRIFT

(11) **EP 4 223 963 B1**
(45) Veröffentlichungstag und Bekanntmachung des Hinweises auf die Patenterteilung: **12.08.2026**
(21) Anmeldenummer: 23151671.7
(22) Anmeldetag: 16.01.2023
(51) Int. Cl.: E05B 73/00, E05B 71/00, B62H 5/00

(54) **KLOBENSCHLOSS**
LOCK FOR A SLIDING LOCK
SERRURE À CROCHET

(30) Priorität: 02.02.2022 DE 102022102480
(43) Veröffentlichungstag der Anmeldung: 09.08.2023
(73) Patentinhaber: ABUS August Bremicker Söhne KG, 58300 Wetter-Volmarstein (DE)
(72) Erfinder:
(74) Vertreter: Manitz Finsterwald Patent- und Rechtsanwaltspartnerschaft mbB

(56) Entgegenhaltungen:
- DE-A1- 19 706 560
- US-A- 3 990 275

## Beschreibung

Die Erfindung betrifft ein Klobenschloss mit einem Schlosskörper und einem an dem Schlosskörper verriegelbaren Kloben. Der Schlosskörper weist ein Gehäuse, einen Schließzylinder, einen Riegel und eine Vorspannfeder auf. Das Gehäuse beherbergt den Schließzylinder und weist einen Einführkanal auf, in den der Kloben entlang einer Einführrichtung eingeführt werden kann. Der Riegel ist von der Vorspannfeder in Richtung einer Verriegelungsstellung vorgespannt, in der der Riegel in eine Verriegelungsvertiefung des Klobens eingreift und hierdurch den Kloben verriegelt.

Ein derartiges Klobenschloss dient dazu, ein erstes Objekt und ein zweites Objekt wahlweise aneinander festzulegen. Hierfür kann der Schlosskörper an dem ersten Objekt dauerhaft befestigt sein. Der Kloben kann dem zweiten Objekt zugeordnet sein, wobei der Kloben beispielsweise mit einer Kette oder einem Drahtseil (Metallseil, insbesondere Stahlseil) verbunden sein kann, die/das mit dem zweiten Objekt verbunden oder verbindbar ist. Beispielsweise kann es sich bei dem ersten Objekt um ein Kraftfahrzeug (zum Beispiel einen Fahrradträger eines Personenkraftwagens) oder ein Gebäude (zum Beispiel eine Gebäudewand handeln), während das zweite Objekt ein Zweirad (zum Beispiel ein Fahrrad oder Elektrofahrrad) ist, welches wahlweise gesichert werden soll. Es ist beispielsweise auch möglich, dass es sich bei dem ersten Objekt um ein ein Zweirad handelt (zum Beispiel ein Fahrrad mit einem Rahmenschloss), das an dem zweiten Objekt (zum Beispiel Gebäudewand, Fahrradständer oder Laternenpfosten) wahlweise gesichert werden soll. Aus FR 2879555 A1 ist eine Kette bekannt, die an einem Ende einen Kloben und am anderen Ende eine Öse aufweist, durch die der Kloben hindurchgeführt werden kann, um eine geschlossene Schlaufe um ein Objekt herum zu bilden.

Bei einem derartigen Klobenschloss kann ein Manipulationsversuch darin bestehen, auf den Kloben eine Zugkraft entgegen seiner Einführrichtung auszuüben und durch gleichzeitiges Einwirken den Riegel entgegen seiner Vorspannung in Richtung einer Entriegelungsstellung zu drängen. Einem derartigen Manipulationsversuch kann zwar durch eine Sperrgeometrie entgegengewirkt werden. Allerdings soll eine solche Sperrgeometrie nicht eine Entriegelung des Klobenschlosses durch einen berechtigten Benutzer verhindern oder erschweren.

US 3 990 275 A zeigt ein Schloss mit den Merkmalen des Oberbegriffs des Anspruchs 1. Aus DE 197 06 560 A1 ist ein Schloss mit einem verrastbaren Steckzapfen bekannt.

Eine Aufgabe der Erfindung besteht darin, ein Klobenschloss mit einer verbesserten Manipulationssicherheit zu schaffen, das jedoch von einem berechtigten Benutzer komplikationslos entriegelt werden kann.

Diese Aufgabe wird durch ein Klobenschloss mit den Merkmalen des Anspruchs 1 gelöst.

Das Klobenschloss umfasst einen Schlosskörper und einen an dem Schlosskörper verriegelbaren Kloben. Der Schlosskörper weist ein Gehäuse, einen Schließzylinder, einen Riegel und eine Vorspannfeder auf. Das Gehäuse beherbergt den Schließzylinder und weist einen Einführkanal auf, in den der Kloben entlang einer Einführrichtung einführbar ist. Der Riegel ist in dem Gehäuse zwischen einer Verriegelungsstellung und einer Entriegelungsstellung beweglich gelagert. In der Verriegelungsstellung greift der Riegel in eine Verriegelungsvertiefung des Klobens ein und verriegelt hierdurch den Kloben, wenn der Kloben in den Einführkanal eingeführt ist. In der Entriegelungsstellung gibt der Riegel den Kloben für eine Entnahme aus dem Einführkanal frei. Die Vorspannfeder spannt den Riegel in Richtung der Verriegelungsstellung vor. Der Schließzylinder weist einen drehbaren Antriebsabschnitt zum (direkten oder indirekten) Antreiben des Riegels in Richtung der Entriegelungsstellung auf. Das Gehäuse und der Riegel weisen einen jeweiligen Sperrabschnitt auf, wobei der Sperrabschnitt des Gehäuses und der Sperrabschnitt des Riegels dazu ausgebildet sind, in Eingriff miteinander zu gelangen und hierdurch den Riegel gegen eine Bewegung aus der Verriegelungsstellung in Richtung der Entriegelungsstellung zu sperren, wenn über den in den Einführkanal eingeführten Kloben auf den in der Verriegelungsstellung befindlichen Riegel eine Kraft entgegen der Einführrichtung des Klobens ausgeübt wird. Die Vorspannfeder ist derart schräg ausgerichtet, dass die Vorspannfeder den Riegel zusätzlich entlang der Einführrichtung des Klobens vorspannt. Bezogen auf die Bewegungsrichtung des Riegels zwischen der Entriegelungsstellung und der Verriegelungsstellung ist die Vorspannfeder für den Riegel in einem spitzen Winkel ausgerichtet, der einen Wert im Bereich von 5 Grad bis 45 Grad aufweist (zum Beispiel ca. 10 Grad).

Das Klobenschloss weist somit eine Sperrgeometrie auf, die ein manipulatives Entriegeln verhindert oder zumindest erschwert. Zwar kann auf den Kloben eine Zugkraft entgegen der Einführrichtung ausgeübt werden, die über die Verriegelungsvertiefung des Klobens, in welche der Riegel eingreift, auf den Riegel übertragen wird. Allerdings wird der Riegel durch die Bewegung entgegen der Einführrichtung des Klobens in eine Position bewegt, in welcher der Sperrabschnitt des Gehäuses und der Sperrabschnitt des Riegels in Anlage miteinander gelangen, wenn zusätzlich versucht wird, den Riegel manipulativ (z.B. durch Schlagen auf den Schlosskörper oder Bewegen des Klobens) entgegen seiner Vorspannung in Richtung der Entriegelungsstellung zu drängen. Hierfür kann der Riegel zumindest an einem dem Kloben zugeordneten Ende in dem Gehäuse mit Spiel (entgegen der Einführrichtung des Klobens) gelagert sein. Der Sperrabschnitt des Gehäuses und der Sperrabschnitt des Riegels können beispielsweise Anschläge bilden, die in Kontakt miteinander gelangen und hierdurch eine (weitergehende) Bewegung des Riegels in Richtung der Entriegelungsstellung verhindern.

Allerdings wird durch das Klobenschloss auch das Problem eines unerwünschten Erschwerens einer Entriegelung des Klobenschlosses durch einen berechtigten Benutzer gelöst. Bei manchen Anwendungen kann es sich nämlich ergeben, dass auf den verriegelten Kloben dauerhaft eine gewisse Zugkraft entgegen der Einführrichtung ausgeübt wird. Beispielsweise kann eine solche Zugkraft allein aufgrund des Gewichts einer mit dem Kloben verbundenen Kette erzeugt werden, wie dies aus der eingangs genannten FR 2879555 A1 ersichtlich ist. Bei anderen Anwendungen kann es sein, dass ein Objekt, welches von einem mit dem Kloben verbundenen Drahtseil umschlungen ist, eine gewisse Zugspannung auf das Drahtseil und somit auf den Kloben ausgeübt (z.B. ein Drahtseil, das um ein auf einem Fahrradträger eines Personenkraftwagens platziertes Fahrrad geschlungen ist). Wenn der berechtigte Benutzer, also der Inhaber des dem Schließzylinder zugeordneten Schlüssels, in einer derartigen Situation versucht, den Kloben durch Betätigung des Schließzylinders zu entriegeln, kann die (unbeabsichtigt oder unbewusst) auf den Kloben wirkende Zugkraft die erläuterte Sperrwirkung des Sperrabschnitts des Gehäuses und des Sperrabschnitts des Riegels auslösen, so dass der Schließzylinder sich anscheinend nicht korrekt betätigen lässt und der Kloben nicht entriegelt werden kann.

Um eine derartige vermeintliche Fehlfunktion zu verhindern, ist die Vorspannfeder für den Riegel schräg ausgerichtet, und zwar derart, dass sie den Riegel nicht nur in Richtung der Verriegelungsstellung, sondern zusätzlich mit einer Kraftkomponente entlang der Einführrichtung des Klobens vorspannt. Hierdurch wird erreicht, dass der in der Verriegelungsstellung befindliche Riegel - sofern auf den Kloben nicht eine Mindestkraft entgegen der Einführrichtung ausgeübt wird, wie dies für den genannten Manipulationsversuch erforderlich ist - sich entlang der Einführrichtung des Klobens in einer Position befindet, in der eine Bewegung in Richtung der Entriegelungsstellung möglich ist, ohne dass der Sperrabschnitt des Gehäuses und der Sperrabschnitt des Riegels in Eingriff miteinander gelangen. Somit kann der berechtigte Benutzer mittels des zugeordneten Schlüssels den Schließzylinder des Klobenschlosses gewöhnlich komplikationslos betätigen und hierdurch den Kloben für eine Entnahme aus dem Schlosskörper entriegeln. Falls hingegen auf den verriegelten Kloben eine relativ hohe Zugkraft entgegen der Einführrichtung ausgeübt wird (d.h. höher als die genannte Kraftkomponente der schräg ausgerichteten Vorspannfeder), um den Kloben manipulativ entriegeln und entnehmen zu können, wird die erläuterte Sperrgeometrie aktiviert (d.h. der Sperrabschnitt des Gehäuses und der Sperrabschnitt des Riegels können in Anlage miteinander gelangen, wenn der Riegel nun auch eine Bewegung in Richtung der Entriegelungsstellung durchführt).

Weitere Ausführungsformen der Erfindung sind nachstehend erläutert.

Bei einigen Ausführungsformen kann der Sperrabschnitt des Gehäuses beispielsweise eine Kante aufweisen. Die Kante kann insbesondere durch eine Stufe des Gehäuses gebildet sein. Die Kante des Gehäuses kann beispielsweise eine Anschlagfläche begrenzen, welche im Wesentlichen entlang einer Normalebene zu der Bewegungsrichtung des Riegels oder schräg, insbesondere geringfügig schräg, zu einer solchen Normalebene ausgerichtet ist und als Anschlag für den Sperrabschnitt des Riegels dient.

Bei einigen Ausführungsformen kann der Sperrabschnitt des Gehäuses außerhalb des Einführkanals des Gehäuses angeordnet sein. Eine Ausbildung des Sperrabschnitts des Gehäuses außerhalb des Einführkanals für den Kloben kann die Herstellung des Gehäuses vereinfachen. Ferner kann hierdurch besser die Ablagerung von Schmutz in dem Einführkanal vermieden werden, der durch die außenseitige Öffnung des Einführkanals in den Einführkanal eindringen kann und das Zusammenwirken des Riegels mit der Verriegelungsvertiefung des Klobens beeinträchtigen könnte.

Bei einigen Ausführungsformen kann der Sperrabschnitt des Riegels durch eine Erhebung gebildet sein. Der Sperrabschnitt des Riegels kann beispielsweise eine Kante aufweisen. Die Kante des Riegels kann beispielsweise eine Anschlagfläche begrenzen, welche insbesondere parallel zu der Anschlagfläche des Gehäuses ausgerichtet sein kann und als Anschlag für den Sperrabschnitt des Gehäuses dient.

Der Sperrabschnitt des Gehäuses und der Sperrabschnitt des Riegels können somit eine jeweilige Anschlagfläche aufweisen, die im Wesentlichen parallel zueinander ausgerichtet sind, um im Falle des Anliegens aneinander einen Formschluss einzugehen und die erläuterte Sperrwirkung zuverlässig auszuüben.

Bei einigen Ausführungsformen kann der Sperrabschnitt des Riegels durch eine gestanzte und gebogene Zunge gebildet sein. Als Zunge kann in diesem Zusammenhang insbesondere ein umgebogener, an drei Seiten freigestellter Abschnitt des Riegels zu verstehen sein. Hierdurch ist eine besonders einfache und kostengünstige Ausbildung des Sperrabschnitts des Riegels möglich, insbesondere wenn dieser durch ein Stanzbiegeteil gebildet ist.

Bei einigen Ausführungsformen kann der Riegel einteilig ausgebildet sein und von dem Antriebsabschnitt des Schließzylinders direkt angetrieben sein. Hierdurch kann die Beweglichkeit des Riegels (Beweglichkeit in Längsrichtung zwischen der Verriegelungsstellung und der Entriegelungsstellung, sowie erforderliches Spiel entlang der Einführrichtung des Klobens) besonders genau vorgegeben werden. Bei anderen Ausführungsformen kann der Riegel (einteilig oder mehrteilig ausgebildet) von dem Antriebsabschnitt des Schließzylinders indirekt angetrieben sein, d.h. über wenigstens ein bewegliches Zwischenelement.

Bei einigen Ausführungsformen kann der Riegel - abgesehen von dem erläuterten Spiel entlang der Einführrichtung des Klobens - im Wesentlichen linear (d.h. geradlinig) beweglich in dem Gehäuse gelagert sein.

Bei einigen Ausführungsformen kann das Gehäuse benachbart zu dem Einführkanal für den Kloben einen Umgreifungsabschnitt aufweisen, der den Riegel umfänglich geschlossen umgreift und hierdurch ein Spiel des Riegels entlang der Einführrichtung des Klobens festlegt. Damit der Sperrabschnitt des Gehäuses und der Sperrabschnitt des Riegels im Falle eines Manipulationsversuchs in Anlage miteinander gelangen können, ist - wie erläutert - ein gewisses Spiel des Riegels an dessen dem Kloben zugeordneten Ende erforderlich. Durch den genannten Umgreifungsabschnitt des Gehäuses, der eine Durchtrittsöffnung für den Riegel bilden kann, kann dieses Spiel mit der erforderlichen Genauigkeit definiert werden.

Bei einigen Ausführungsformen kann die Vorspannfeder für den Riegel bzw. deren Wirkrichtung in einem spitzen Winkel relativ zu der Einführrichtung des Klobens ausgerichtet sein. Hierdurch kann die erwünschte Kraftkomponente entlang der Einführrichtung des Klobens vorgegeben werden. Der Winkel kann beispielsweise einen Wert im Bereich von 55 Grad bis 85 Grad aufweisen (zum Beispiel ca. 80 Grad).

Bei einigen Ausführungsformen kann der Schließzylinder ein Zylindergehäuse und einen in dem Zylindergehäuse drehbaren Zylinderkern umfassen. Der Antriebsabschnitt des Schließzylinders kann an dem drehbaren Zylinderkern ausgebildet und bezüglich einer Drehachse des Zylinderkerns exzentrisch angeordnet sein.

Bei einigen Ausführungsformen kann der Schließzylinder eine Schlüsseleinführöffnung für einen zugeordneten Schlüssel aufweisen, wobei das Gehäuse eine Klobeneinführöffnung des Einführkanals für den Kloben aufweist, und wobei die Schlüsseleinführöffnung und die Klobeneinführöffnung in dieselbe Richtung weisen. Somit sind bei derartigen Ausführungsformen die Schlüsseleinführöffnung und die Klobeneinführöffnung aus derselben Richtung zugänglich (z.B. frontal). Dies kann die Bedienung des Klobenschlosses (Betätigen des Schließzylinders und Einführen des Klobens) erleichtern, insbesondere wenn der Schlosskörper an einer Zugangsfläche (z.B. Fahrradträger, Gebäudewand) fest montiert ist.

Bei einigen Ausführungsformen können ein Schlüsselkanal des Schließzylinders und der Einführkanal für den Kloben zumindest im Wesentlichen parallel zueinander ausgerichtet sein.

Bei einigen Ausführungsformen können die Einführrichtung des Klobens und eine Schlüsseleinführrichtung des Schließzylinders zumindest im Wesentlichen parallel zueinander verlaufen, wobei die Bewegungsrichtung des Riegels zumindest im Wesentlichen senkrecht hierzu verläuft.

Bei einigen Ausführungsformen kann der Kloben im Wesentlichen zylindrisch ausgebildet sein (d.h. rotationssymmetrisch stiftförmig), wobei die Verriegelungsvertiefung umlaufend ausgebildet sein kann (d.h. als Ringnut).

Bei einigen Ausführungsformen kann der Kloben mit einem Seil oder einer Kette dauerhaft verbunden sein, um hierdurch mittels des Klobens ein Objekt relativ zu dem Schlosskörper sichern zu können.

Die Erfindung wird nachfolgend lediglich beispielhaft anhand der Zeichnungen erläutert.
- Fig. 1: zeigt eine Seitenansicht von Teilen eines Klobenschlosses.
- Fig. 2: zeigt eine Perspektivansicht hiervon.
- Fig. 3: zeigt eine Schnittansicht hiervon.
- Fig. 4: zeigt eine Explosionsansicht von Teilen des Klobenschlosses.
- Fig. 5: zeigt eine weitere Explosionsansicht.

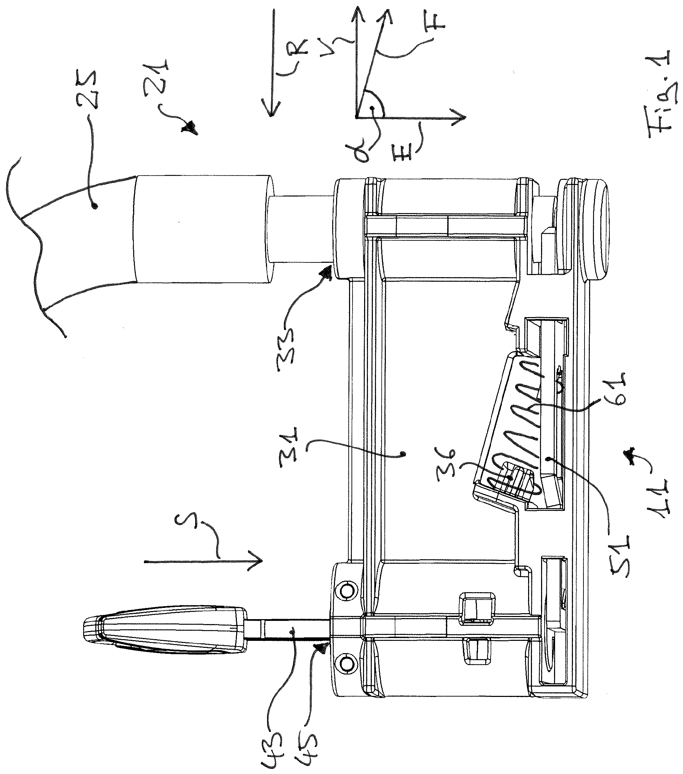

Das in Fig. 1 gezeigte Klobenschloss umfasst einen Schlosskörper 11 und einen an dem Schlosskörper verriegelbaren Kloben 21. Der Schlosskörper 11 weist ein Gehäuse 31, einen Schließzylinder 41, einen Riegel 51 und eine (durch eine Spiralfeder gebildete) Vorspannfeder 61 auf. Das Gehäuse 31 kann beispielsweise aus Zinkdruckguss gefertigt sein und von einem Außengehäuse (nicht gezeigt) umgeben sein.

Das Gehäuse 31 kann Befestigungsmittel aufweisen, um den Schlosskörper 11 an einer Einbauumgebung (z.B. Gebäudewand, Fahrradträger eines Personenkraftwagens) zu befestigen (nicht gezeigt). Der Schließzylinder 41 ist in dem Gehäuse 31 aufgenommen und kann mittels eines zugeordneten Schlüssels 43 drehbetätigt werden, der an einer Schlüsseleinführöffnung 45 entlang einer Schlüsseleinführrichtung S in den Schließzylinder 41 eingeführt werden kann. Durch Drehen des eingeführten Schlüssels 43 kann ein exzentrischer Antriebsabschnitt 47, der an dem der Schlüsseleinführöffnung 45 abgewandten Ende des Schließzylinders 41 angeordnet ist, wahlweise gedreht werden.

Das Gehäuse 31 weist einen Einführkanal 33 auf, in den der Kloben 21 durch eine Klobeneinführöffnung 35 hindurch entlang einer Einführrichtung E eingeführt werden kann. Die Schlüsseleinführöffnung 45 für den Schlüssel 43 und die Klobeneinführöffnung 35 für den Kloben 21 weisen in dieselbe Richtung. Die Einführrichtung E des Klobens 21 und die Schlüsseleinführrichtung S des Schließzylinders 41 verlaufen parallel zueinander (vgl. Fig. 1).

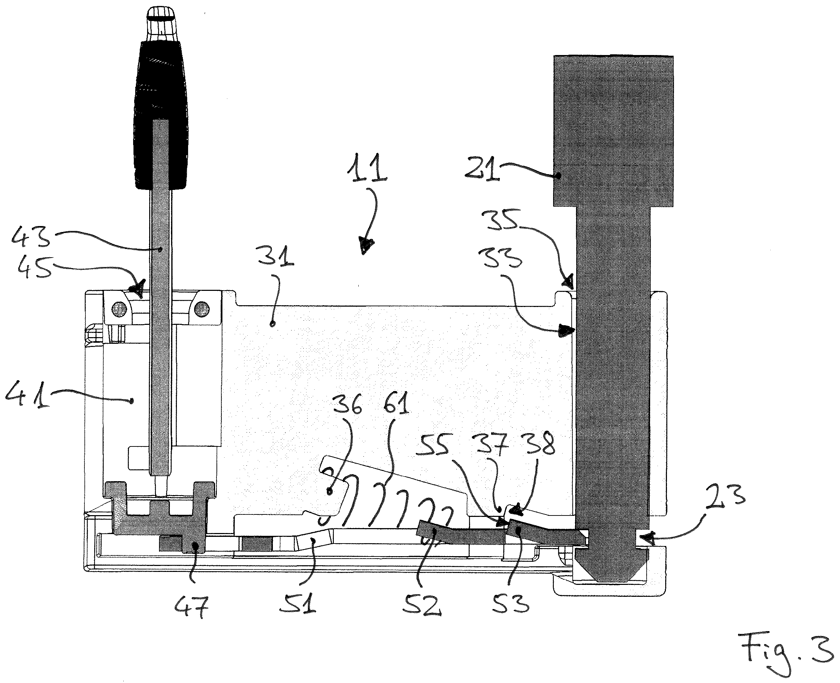

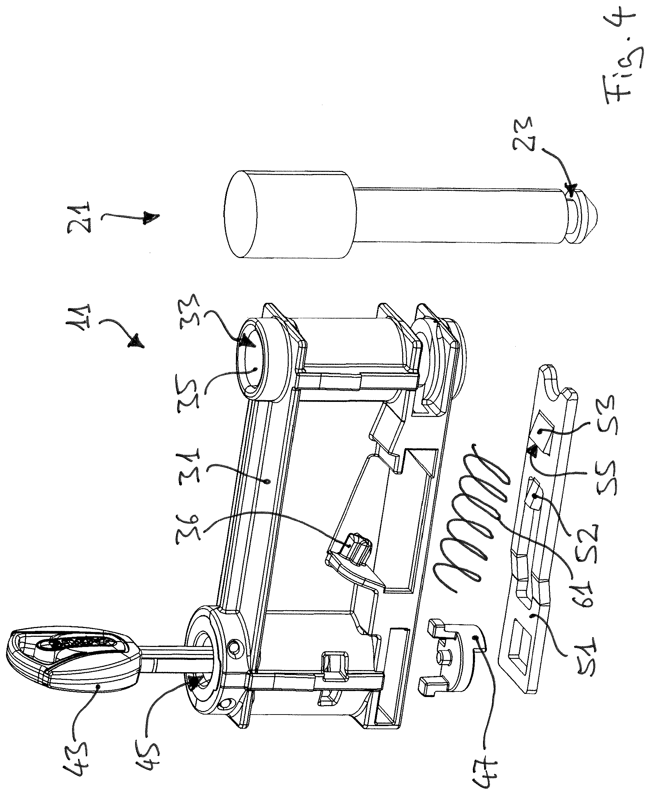

Der Kloben 21 besitzt eine im Wesentlichen zylindrische Form mit einer umlaufenden Verriegelungsvertiefung 23 in Form einer Ringnut (vgl. Fig. 3 bis 5). An dem Kloben 21 kann beispielsweise ein Drahtseil 25 (wie in Fig. 1 angedeutet) oder eine Kette befestigt sein.

Der Riegel 51 ist einteilig durch ein Stanzbiegeteil gebildet und ist in dem Gehäuse 31 zwischen einer Verriegelungsstellung (wie in Fig. 1 gezeigt) und einer Entriegelungsstellung beweglich gelagert. Der Riegel 51 kann durch den in den Riegel 51 eingreifenden Antriebsabschnitt 47 des Schließzylinders 41 im Wesentlichen geradlinig entlang einer Entriegelungsrichtung R angetrieben werden, die entgegensetzt zu einer Verriegelungsrichtung V verläuft (vgl. Fig. 1). Die Entriegelungsrichtung R und die Verriegelungsrichtung V verlaufen senkrecht zu der Einführrichtung E des Klobens 21 und der Schlüsseleinführrichtung S des Schließzylinders 41. Die Vorspannfeder 61 ist zwischen dem Gehäuse 31 (Einhängezapfen 36) und dem Riegel 51 (gestanzte und gebogene Einhängezunge 52) eingehängt und spannt den Riegel 51 entlang einer Vorspannrichtung F in die Verriegelungsstellung vor.

Was die Verriegelungsfunktion des gezeigten Klobenschlosses betrifft, so greift in der Verriegelungsstellung gemäß Fig. 1 der Riegel 51 entsprechend der von der Vorspannfeder 61 ausgeübten Kraft in die Verriegelungsvertiefung 23 des Klobens 21 ein und verriegelt hierdurch den Kloben 21 an dem Schlosskörper 11, wenn der Kloben 21 in den Einführkanal 33 eingeführt ist. Hierdurch kann ein Objekt (z.B. ein Fahrrad), um welches das Drahtseil 25 geschlungen ist, an dem Schlosskörper 11 gesichert werden. Durch die genannte Drehbetätigung des Schlüssels 43 kann über den drehbaren Antriebsabschnitt 47 des Schließzylinders 41 der Riegel 41 entgegen seiner Vorspannung in die Entriegelungsstellung zurückgezogen werden, sodass der Riegel 41 den Kloben 21 für eine Entnahme aus dem Einführkanal 33 freigibt.

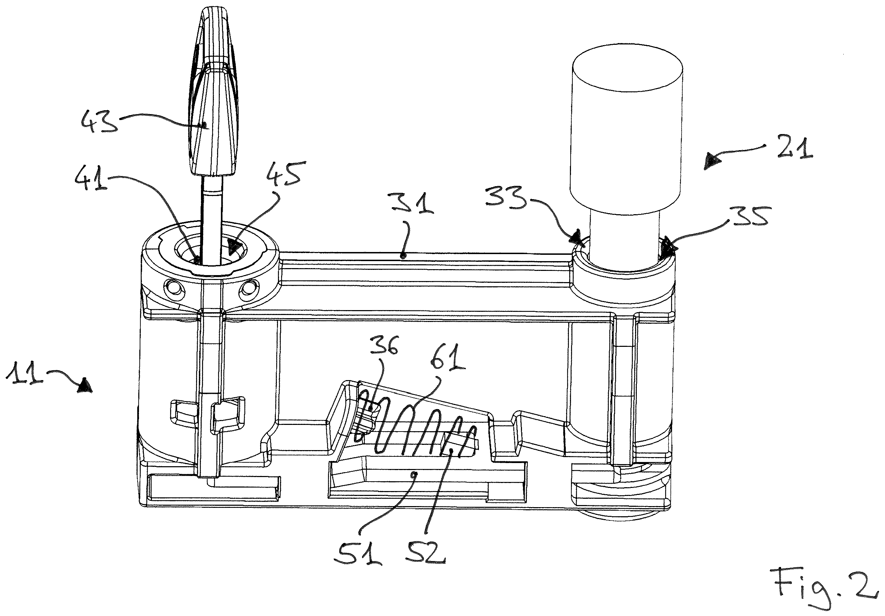

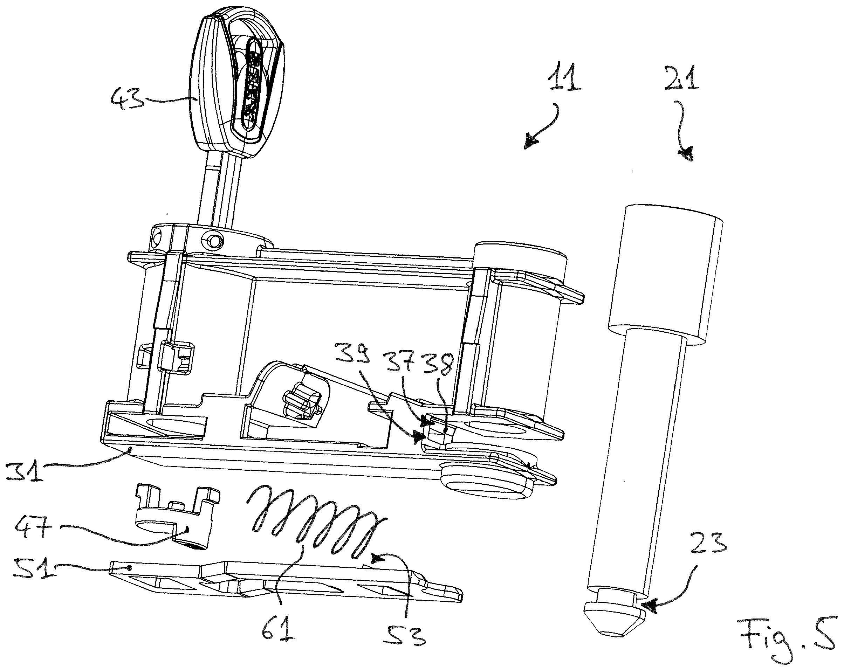

Das Gehäuse 31 weist einen Sperrabschnitt 37 auf. Der Sperrabschnitt 37 weist eine Anschlagfläche 38 und eine die Anschlagfläche 38 begrenzende Kante auf, die durch eine Stufe bzw. einen Rücksprung gebildet ist. Der Sperrabschnitt 37 des Gehäuses 31 ist außerhalb des Einführkanals 33 für den Kloben 21 angeordnet. Der Riegel 51 weist ebenfalls einen Sperrabschnitt 53 auf, der durch eine Erhebung in Form einer gestanzten und gebogenen Zunge gebildet ist. Der Sperrabschnitt 53 des Riegels 51 weist eine Anschlagfläche 55 auf, die im Wesentlichen parallel zu der Anschlagfläche 38 des Gehäuses 31 ausgerichtet ist. Der Sperrabschnitt 37 des Gehäuses 31 und der Sperrabschnitt 53 des Riegels 51 sind dazu ausgebildet, in Anlage miteinander zu gelangen und hierdurch den Riegel 51 gegen eine Bewegung aus der Verriegelungsstellung entlang der Entriegelungsrichtung R zu sperren, wenn bei einem Manipulationsversuch über den in den Einführkanal 33 eingeführten Kloben 21 auf den Riegel 51 eine Kraft entgegen der Einführrichtung E des Klobens 21 ausgeübt wird und zusätzlich versucht wird, den Riegel 51 entlang der Entriegelungsrichtung R zu bewegen. Durch eine derartige Kraftausübung wird der Riegel 51 nämlich entgegen der Einführrichtung E des Klobens 21 in eine Position bewegt (in Fig. 1 bis 5 nach oben), in welcher der Sperrabschnitt 37 des Gehäuses 31 und der Sperrabschnitt 53 des Riegels 51 auf gleiche Höhe gelangen und somit entlang der Entriegelungsrichtung R in Eingriff miteinander gelangen können. Hierfür weist der Riegel 51 an seinem dem Kloben 21 zugewandten Ende in dem Gehäuse 31 ein gewisses Spiel auf, welches durch die lichte Höhe eines Umgreifungsabschnitts 39 des Gehäuses 31 vorgegeben ist, durch den der Riegel 51 hindurchragt (vgl. Fig. 5).

Damit dieser Sperrmechanismus jedoch die bestimmungsgemäße Entriegelung durch den berechtigten Benutzer - also durch Drehbetätigung des Schließzylinders 41 mittels des zugeordneten Schlüssels 43 - nicht behindert, ist die Vorspannfeder 61 derart schräg ausgerichtet, dass die Vorspannfeder 61 den Riegel 51 nicht nur entlang der Verriegelungsrichtung V, sondern zusätzlich entlang der Einführrichtung E des Klobens vorspannt. Hierfür verläuft die Vorspannrichtung F der Vorspannfeder 61 in einem spitzen Winkel α zu der Einführrichtung E des Klobens 21 (vgl. Fig. 1). Die entlang der Einführrichtung E verlaufende Komponente der von der Vorspannfeder 61 ausgeübten Kraft ist somit geringer als die entlang der Verriegelungsrichtung V verlaufende Kraftkomponente. Der Winkel α kann beispielsweise einen Wert im Bereich von 55 Grad bis 85 Grad aufweisen (zum Beispiel ca. 80 Grad).

Durch die schräge Ausrichtung der Vorspannfeder 61 wird erreicht, dass der in der Verriegelungsstellung befindliche Riegel 51 - sofern auf den Kloben 21 nicht eine Mindestkraft entgegen der Einführrichtung E ausgeübt wird, wie dies für den genannten Manipulationsversuch erforderlich ist - sich entlang der Einführrichtung E des Klobens 21 in einer Position befindet, in der eine Bewegung in Entriegelungsrichtung R möglich ist, ohne dass der Sperrabschnitt 37 des Gehäuses 31 und der Sperrabschnitt 53 des Riegels 51 unbeabsichtigt in Eingriff miteinander gelangen. Somit kann der berechtigte Benutzer mittels des zugeordneten Schlüssels 43 den Schließzylinder 41 des Klobenschlosses gewöhnlich komplikationslos betätigen und hierdurch den Kloben 21 für eine Entnahme aus dem Schlosskörper 11 entriegeln.

### Bezugszeichenliste

- 11: Schlosskörper
- 21: Kloben
- 23: Verriegelungsvertiefung des Klobens
- 25: Drahtseil
- 31: Gehäuse
- 33: Einführkanal
- 35: Klobeneinführöffnung des Einführkanals
- 36: Einhängezapfen
- 37: Sperrabschnitt des Gehäuses
- 38: Anschlagfläche des Gehäuses
- 39: Umgreifungsabschnitt des Gehäuses
- 41: Schließzylinder
- 43: Schlüssel
- 45: Schlüsseleinführöffnung des Schließzylinders
- 47: Antriebsabschnitt
- 51: Riegel
- 52: Einhängezunge
- 53: Sperrabschnitt des Riegels
- 55: Anschlagfläche des Riegels
- 61: Vorspannfeder
- E: Einführrichtung des Klobens
- F: Vorspannrichtung
- V: Verriegelungsrichtung
- R: Entriegelungsrichtung
- S: Schlüsseleinführrichtung
- α: Winkel

## Patentansprüche

1. Klobenschloss mit einem Schlosskörper (11) und einem an dem Schlosskörper (11) verriegelbaren Kloben (21),
wobei der Schlosskörper (11) ein Gehäuse (31), einen Schließzylinder (41), einen Riegel (51) und eine Vorspannfeder (61) aufweist,
wobei das Gehäuse (31) den Schließzylinder (41) beherbergt und einen Einführkanal (33) aufweist, in den der Kloben (21) entlang einer Einführrichtung (E) einführbar ist,
wobei der Riegel (51) in dem Gehäuse (31) zwischen einer Verriegelungsstellung und einer Entriegelungsstellung beweglich gelagert ist, wobei in der Verriegelungsstellung der Riegel (51) in eine Verriegelungsvertiefung (23) des Klobens (21) eingreift und hierdurch den Kloben (21) verriegelt, wenn der Kloben (21) in den Einführkanal (33) eingeführt ist, und wobei in der Entriegelungsstellung der Riegel (51) den Kloben (21) für eine Entnahme aus dem Einführkanal (33) freigibt,
wobei die Vorspannfeder (61) den Riegel (51) in Richtung der Verriegelungsstellung vorspannt,
wobei der Schließzylinder (41) einen drehbaren Antriebsabschnitt (47) zum Antreiben des Riegels (51) in Richtung der Entriegelungsstellung aufweist, wobei der Schlosskörper (11) einen Sperrabschnitt (37) aufweist und der Riegel (51) einen Sperrabschnitt (53) aufweist, wobei der Sperrabschnitt (37) des Schlosskörpers (11) und der Sperrabschnitt (53) des Riegels (51) dazu ausgebildet sind, in Anlage miteinander zu gelangen und hierdurch den Riegel (51) gegen eine Bewegung aus der Verriegelungsstellung in Richtung der Entriegelungsstellung zu sperren, wenn über den in den Einführkanal (33) eingeführten Kloben (21) auf den in der Verriegelungsstellung befindlichen Riegel (51) eine Kraft entgegen der Einführrichtung (E) des Klobens (21) ausgeübt wird,
wobei die Vorspannfeder (61) derart schräg ausgerichtet ist, dass die Vorspannfeder (61) den Riegel (51) zusätzlich entlang der Einführrichtung (E) des Klobens (21) vorspannt,
**dadurch gekennzeichnet,**
**dass** der Sperrabschnitt (37) des Schlosskörpers (11) an dem Gehäuse (31) des Schlosskörpers (11) vorgesehen ist, und
**dass** die Vorspannfeder (61) bezogen auf die Bewegungsrichtung (R, V) des Riegels (51) zwischen der Entriegelungsstellung und der Verriegelungsstellung in einem spitzen Winkel ausgerichtet ist, der einen Wert im Bereich von 5 Grad bis 45 Grad aufweist.

2. Klobenschloss nach Anspruch 1,
wobei der Sperrabschnitt (37) des Gehäuses (31) eine Anschlagfläche (38) aufweist, wobei der Sperrabschnitt (53) des Riegels (51) eine Anschlagfläche (55) aufweist, die im Wesentlichen parallel zu der Anschlagfläche (38) des Gehäuses (31) ausgerichtet ist.

3. Klobenschloss nach Anspruch 1 oder 2,
wobei der Sperrabschnitt (37) des Gehäuses (31) eine Kante aufweist.

4. Klobenschloss nach einem der vorhergehenden Ansprüche,
wobei der Sperrabschnitt (37) des Gehäuses (31) außerhalb des Einführkanals (33) des Gehäuses (31) angeordnet ist.

5. Klobenschloss nach einem der vorhergehenden Ansprüche,
wobei der Sperrabschnitt (53) des Riegels (51) durch eine Erhebung gebildet ist.

6. Klobenschloss nach einem der vorhergehenden Ansprüche,
wobei der Sperrabschnitt (53) des Riegels (51) durch eine gestanzte und gebogene Zunge gebildet ist.

7. Klobenschloss nach einem der vorhergehenden Ansprüche,
wobei der Riegel (51) einteilig ausgebildet ist und von dem Antriebsabschnitt (47) des Schließzylinders (41) direkt angetrieben ist.

8. Klobenschloss nach einem der vorhergehenden Ansprüche,
wobei das Gehäuse (31) benachbart zu dem Einführkanal (33) für den Kloben (21) einen Umgreifungsabschnitt (39) aufweist, der den Riegel (51) umfänglich geschlossen umgreift und hierdurch ein Spiel des Riegels (51) entlang der Einführrichtung (E) des Klobens (21) festlegt.

9. Klobenschloss nach einem der vorhergehenden Ansprüche,
wobei die Vorspannfeder (61) in einem spitzen Winkel (α) relativ zu der Einführrichtung (E) des Klobens (21) ausgerichtet ist.

10. Klobenschloss nach einem der vorhergehenden Ansprüche,
wobei der Schließzylinder (41) eine Schlüsseleinführöffnung (45) für einen Schlüssel (43) aufweist, wobei das Gehäuse (31) eine Klobeneinführöffnung (35) des Einführkanals (33) für den Kloben (21) aufweist, und wobei die Schlüsseleinführöffnung (45) und die Klobeneinführöffnung (35) in dieselbe Richtung weisen.

11. Klobenschloss nach einem der vorhergehenden Ansprüche,
wobei die Einführrichtung (E) des Klobens (21) und eine Schlüsseleinführrichtung (S) des Schließzylinders (41) im Wesentlichen parallel zueinander verlaufen, wobei die Bewegungsrichtung (R, V) des Riegels (51) im Wesentlichen senkrecht hierzu verläuft.

12. Klobenschloss nach einem der vorhergehenden Ansprüche,
wobei der Kloben (21) zylindrisch ist, wobei die Verriegelungsvertiefung (23) umlaufend ausgebildet ist.

13. Klobenschloss nach einem der vorhergehenden Ansprüche,
wobei der Kloben (21) mit einem Seil (25) oder einer Kette verbunden ist.

## Claims

1. A bolt lock comprising a lock body (11) and a bolt (21) lockable to the lock body (11),
wherein the lock body (11) has a housing (31), a lock cylinder (41), a latch (51) and a biasing spring (61),
wherein the housing (31) accommodates the lock cylinder (41) and has an introduction passage (33) into which the bolt (21) can be introduced along an introduction direction (E),
wherein the latch (51) is movably supported in the housing (31) between a locking position and an unlocking position, wherein, in the locking position, the latch (51) engages into a locking recess (23) of the bolt (21) and thereby locks the bolt (21) when the bolt (21) is introduced into the introduction passage (33), and wherein, in the unlocking position, the latch (51) releases the bolt (21) for a removal from the introduction passage (33),
wherein the biasing spring (61) biases the latch (51) toward the locking position,
wherein the lock cylinder (41) has a rotatable drive section (47) for driving the latch (51) toward the unlocking position,
wherein the lock body (11) has a blocking section (37) and the latch (51) has a blocking section (53), wherein the blocking section (37) of the lock body (11) and the blocking section (53) of the latch (51) are configured to come into contact with one another and thereby to block the latch (51) against a movement from the locking position toward the unlocking position when a force is exerted via the bolt (21), which is introduced into the introduction passage (33), on the latch (51), which is in the locking position, against the introduction direction (E) of the bolt (21),
wherein the biasing spring (61) is oriented obliquely such that the biasing spring (61) additionally biases the latch (51) along the introduction direction (E) of the bolt (21),
**characterized in that**
the blocking section (37) of the lock body (11) is provided at the housing (31) of the lock body (11), and
**in that** the biasing spring (61) is oriented relative to the direction of movement (R, V) of the latch (51) between the unlocking position and the locking position at an acute angle which has a value in the range of 5 degrees to 45 degrees.

2. A bolt lock according to claim 1,
wherein the blocking section (37) of the housing (31) has a stop surface (38), wherein the blocking section (53) of the latch (51) has a stop surface (55) which is oriented substantially parallel to the stop surface (38) of the housing (31).

3. A bolt lock according to claim 1 or 2,
wherein the blocking section (37) of the housing (31) has an edge.

4. A bolt lock according to any one of the preceding claims,
wherein the blocking section (37) of the housing (31) is arranged outside the introduction passage (33) of the housing (31).

5. A bolt lock according to any one of the preceding claims,
wherein the blocking section (53) of the latch (51) is formed by a protrusion.

6. A bolt lock according to any one of the preceding claims,
wherein the blocking section (53) of the latch (51) is formed by a stamped and bent tongue.

7. A bolt lock according to any one of the preceding claims,
wherein the latch (51) is formed as a single part and is driven directly by the drive section (47) of the lock cylinder (41).

8. A bolt lock according to any one of the preceding claims,
wherein the housing (31) has, adjacent to the introduction passage (33) for the bolt (21), a boundary section (39) which surrounds the latch (51) in a circumferentially closed manner and thereby determines a clearance of the latch (51) along the introduction direction (E) of the bolt (21).

9. A bolt lock according to any one of the preceding claims,
wherein the biasing spring (61) is oriented at an acute angle (α) relative to the introduction direction (E) of the bolt (21).

10. A bolt lock according to any one of the preceding claims,
wherein the lock cylinder (41) has a key introduction opening (45) for a key (43), wherein the housing (31) has a bolt introduction opening (35) of the introduction passage (33) for the bolt (21), and wherein the key introduction opening (45) and the bolt introduction opening (35) face in the same direction.

11. A bolt lock according to any one of the preceding claims,
wherein the introduction direction (E) of the bolt (21) and a key introduction direction (S) of the lock cylinder (41) extend substantially parallel to one another, wherein the direction of movement (R, V) of the latch (51) extends substantially perpendicular thereto.

12. A bolt lock according to any one of the preceding claims,
wherein the bolt (21) is cylindrical, wherein the locking recess (23) is formed circumferentially.

13. A bolt lock according to any one of the preceding claims,
wherein the bolt (21) is connected to a rope (25) or a chain.

## Revendications

1. Serrure à crochet comprenant un corps de serrure (11) et un crochet (21) pouvant être verrouillé sur le corps de serrure (11),
le corps de serrure (11) comportant un boîtier (31), un cylindre de fermeture (41), un pêne (51) et un ressort de précontrainte (61),
le boîtier (31) logeant le cylindre de fermeture (41) et comportant un canal d'insertion (33) dans lequel le crochet (21) peut être inséré selon une direction d'insertion (E)
le pêne (51) étant monté de manière mobile dans le boîtier (31) entre une position de verrouillage et une position de déverrouillage, le pêne (51) s'engageant, dans la position de verrouillage, dans un évidement de verrouillage (23) du crochet (21) et verrouille ainsi le crochet (21) lorsque celui-ci est introduit dans le canal d'insertion (33), et dans laquelle, en position de déverrouillage, le pêne (51) libère le crochet (21) pour permettre son retrait du canal d'insertion (33),
le ressort de précontrainte (61) précontraignant le pêne (51) en direction de la position de verrouillage,
le cylindre de fermeture (41) comportant une partie d'entraînement rotative (47) destinée à entraîner le pêne (51) vers la position de déverrouillage, le corps de serrure (11) comportant une partie de blocage (37) et le pêne (51) comportant une partie de blocage (53), la partie de blocage (37) du corps de serrure (11) et la partie de blocage (53) du pêne (51) sont conçues pour venir en butée l'une contre l'autre et bloquer ainsi le pêne (51) contre tout mouvement de la position de verrouillage vers la position de déverrouillage, lorsque le crochet (21) introduit dans le canal d'insertion (33) sur le pêne (51) se trouvant en position de verrouillage, une force est exercée dans le sens opposé à la direction d'insertion (E) du crochet (21), le ressort de précontrainte (61) étant orienté obliquement de telle sorte que le ressort de précontrainte (61) exerce une précontrainte supplémentaire sur le pêne (51) dans le sens d'insertion (E) du crochet (21),
**caractérisé en ce que** la partie de blocage (37) du corps de serrure (11) est prévue sur le boîtier (31) du corps de serrure (11), et **en ce que** le ressort de précontrainte (61) est orienté, par rapport à la direction de déplacement (R, V) du pêne (51) entre la position de déverrouillage et la position de verrouillage, selon un angle aigu dont la valeur est comprise entre 5 degrés et 45 degrés.

2. Serrure à crochet selon la revendication 1,
dans laquelle la partie de blocage (37) du boîtier (31) comporte une surface de butée (38), et la partie de blocage (53) du pêne (51) comporte une surface de butée (55) qui est orientée sensiblement parallèlement à la surface de butée (38) du boîtier (31).

3. Serrure à crochet selon la revendication 1 ou 2,
dans laquelle la partie de blocage (37) du boîtier (31) comporte une arête.

4. Serrure à crochet selon l'une des revendications précédentes,
dans laquelle la partie de blocage (37) du boîtier (31) est disposée à l'extérieur du canal d'insertion (33) du boîtier (31).

5. Serrure à crochet selon l'une des revendications précédentes,
dans laquelle la partie de blocage (53) du pêne (51) est formée par un renflement.

6. Serrure à crochet selon l'une des revendications précédentes,
dans laquelle la partie de blocage (53) du pêne (51) est formée par une languette découpée et pliée.

7. Serrure à crochet selon l'une des revendications précédentes,
le pêne (51) étant réalisé d'un seul tenant et étant entraîné directement par la partie d'entraînement (47) du cylindre de fermeture (41).

8. Serrure à crochet selon l'une des revendications précédentes,
le boîtier (31) comportant, à proximité du canal d'insertion (33) destiné au crochet (21), une partie d'encerclement (39) qui entoure le pêne (51) de manière fermée sur tout son pourtour et définit ainsi un jeu du pêne (51) le long de la direction d'insertion (E) du crochet (21).

9. Serrure à crochet selon l'une des revendications précédentes,
dans laquelle le ressort de précontrainte (61) est orienté selon un angle aigu (α) par rapport à la direction d'insertion (E) du crochet (21).

10. Serrure à crochet selon l'une des revendications précédentes,
dans laquelle le cylindre de fermeture (41) comporte une ouverture d'insertion de clé (45) pour une clé (43), le boîtier (31) comportant une ouverture d'insertion du crochet (35) du canal d'insertion (33) pour le crochet (21), et dans laquelle l'ouverture d'insertion de clé (45) et l'ouverture d'insertion du crochet (35) sont orientés dans la même direction.

11. Serrure à crochet selon l'une des revendications précédentes,
dans laquelle la direction d'insertion (E) du crochet (21) et une direction d'insertion de la clé (S) du cylindre de fermeture (41) sont sensiblement parallèles l'une à l'autre, la direction de déplacement (R, V) du pêne (51) étant sensiblement perpendiculaire à celles-ci.

12. Serrure à crochet selon l'une des revendications précédentes,
dans laquelle le crochet (21) est cylindrique, et dans laquelle l'évidement de verrouillage (23) s'étend sur toute la circonférence.

13. Serrure à crochet selon l'une des revendications précédentes,
dans laquelle le crochet (21) est relié à un câble (25) ou à une chaîne.
